# EUROPEAN PATENT APPLICATION

(11) **EP 4 844 222 A1**
(43) Date of publication of application: **25.11.2026**
(21) Application number: 25177768.6
(22) Date of filing: 20.05.2025
(51) Int. Cl.: F03D 1/06, F03D 7/02

(54) **ACTIVE AERODYNAMIC DEVICE FOR A ROTOR BLADE**

(71) Applicant: Siemens Gamesa Renewable Energy A/S, 7330 Brande (DK)
(72) Inventor: Gonzalez, Alejandro Gomez, 8000 Aarhus (DK); Grishauge, Nikolai Bak, 9240 Nibe (DK); Enevoldsen, Peder Bay, 7100 Vejle (DK); Hoegh, Gustav, 7100 Vejle (DK)
(74) Representative: SGRE-Association

(57) **Abstract**

An active aerodynamic device for a rotor blade of a wind turbine is provided. The active aerodynamic device (10) is configured to be arranged on a surface (104, 105) of the rotor blade (103) to influence, in an activated state, an air flow passing from a leading edge (106) to a trailing edge (107) of the rotor blade (103). The active aerodynamic device comprises a movable element (30) having an activated position in which the movable element (30) protrudes from the surface (104, 105) of the rotor blade and a retracted position in which the movable element (30) protrudes less or does not protrude from the surface (104, 105) of the rotor blade. A pneumatic or hydraulic actuator (40) is controllable to bring the active aerodynamic device (10) into the activated state by applying a positive pressure to the actuator (10) to move the movable element (30) from the retracted position into the activated position.

## Description

### FIELD OF THE INVENTION

The present invention relates to an active aerodynamic device for a rotor blade of a wind turbine. It further relates to a rotor blade comprising such active aerodynamic device, to the wind turbine comprising a respective rotor blade and to a method of operating an active aerodynamic device.

### BACKGROUND

It is often desirable to adjust the aerodynamic properties of a rotor blade of a wind turbine during operation. Typically, pitch control is used for this purpose. It is further possible to control the flow of air around the rotor blades by means of active aerodynamic devices. The document WO 2004/099608 A1 for example describes an aerodynamic device that can be actuated pneumatically. Such active aerodynamic device may for example implement a spoiler which may be used to actively generate stall in a predetermined section of the rotor blade.

It is desirable to improve such active aerodynamic devices. In particular, it is desirable to enhance the functionality and the stability of such devices in a wide range of operating conditions of a wind turbine. Active aerodynamic devices known from the state of the art are normally designed to have optimized performance in the normal operational range of a wind turbine. By normal operational range one understands, e.g. the conditions in which a turbine is producing power, a turbine is idling but where the yaw mechanism of the turbine is continuously aligning the turbine upwind (i.e. to have flow from the front), or a turbine during normal start-ups and shutdowns. A wind turbine, however, must withstand also abnormal conditions, e.g. when it does not have connection to the grid due to grid loss and is thereby unable to control the direction of the nacelle with respect to the wind direction. It is desirable to provide structural integrity and stability of aerodynamic devices also under abnormal conditions.

### SUMMARY

Accordingly, there is a need to mitigate at least some of the drawbacks mentioned above and to provide an improved active aerodynamic device for a rotor blade of a wind turbine.

This need is met by the features of the independent claims. The dependent claims describe embodiments of the invention.

According to an aspect of the present disclosure, an active aerodynamic device for a rotor blade of a wind turbine is provided. The active aerodynamic device is configured to be arranged on a surface of the rotor blade to influence, for example to spoil and/or to disturb, in an activated state an airflow passing from a leading edge to a trailing edge of the rotor blade. The active aerodynamic device comprises a movable element having an activated position in which the movable element protrudes from the surface of the rotor blade and a retracted position in which the movable element protrudes less or does not protrude from the surface of the rotor blade. It further comprises a pneumatic or hydraulic actuator that is controllable to bring the active aerodynamic device into the activated state by applying a positive pressure to the actuator to move the movable element from the retracted position into the activated position. The active aerodynamic device further has a deactivated state in which the movable element is in the retracted position. The active aerodynamic device further comprises a control system, which is configured to apply a negative pressure to the actuator when the active aerodynamic device is in the deactivated state. The actuator is configured and arranged to retain the movable element in the retracted position when the negative pressure is applied.

Such active aerodynamic device may benefit from an improved stability during operation. In particular, in the deactivated state, an unwanted activation may be avoided by the application of the negative pressure. During operation of the wind turbine, due to the rotation of the wind turbine rotor, a centrifugal force may act on a working fluid of the actuator, such as air or another gas of the pneumatic actuator, or on hydraulic fluid, which builds up along the supply line of the active device and which is proportional to the square of the rotational speed of the rotor. As a result, a pressure increase may be experienced by the actuator that may lead to an unwanted activation of the active aerodynamic device, in particular an unwanted moving of the movable element towards the activated position. This may be prevented by the application of the negative pressure to the actuator. As another example, in some situations, such as when the wind turbine is stopped for maintenance work or when the turbine loses connection to the grid and is unable to maintain the power supply to the controller and to the yaw mechanism, the rotor blades of the wind turbine may be exposed to an airflow coming from behind, e.g. hitting the rotor blade from the back, i.e. from the trailing edge of the rotor blade. As a result, a backflow across the surface of the rotor blade may lead to an unwanted activation of the active aerodynamic device. In particular, the movable element may be pushed into a protruding position by such backflow. Again, by application of the negative pressure to the actuator, such unwanted activation may be avoided. The negative pressure applied to the actuator may prevent that the actuator extends or expands, thus keeping the movable element in the retracted position. Even further, during operation of the wind turbine, the airflow passing the surface of the rotor blade may result in a suction being applied to the outer surface of the rotor blade (in particular on the suction side of the respective airfoil, or the side of the movable element of the active aerodynamic device exposed to the air flow), which may result in an unwanted activation of the active aerodynamic device, in particular to a movement of the movable element towards the protruding position. By applying the negative pressure to the actuator, such movement may be prevented. Accordingly, the respective configuration of the active aerodynamic device may improve the stability and operational performance under several operating conditions. Further, damage to the active aerodynamic device may be prevented and its structural integrity may be improved. Even further, a slight partial activation, e.g. movement of the movable element towards the protruding activated position, may already result in an unsteady flow separation at an edge of the movable element, and thus to unfavorable operating conditions. A slight partial activation towards the protruding activated position which leads to such unsteady, periodic, or pulsating flow separation introduces a large amount of unnecessary and harmful loading cycles to the movable element of the active aerodynamic device. By firmly keeping the movable element in the retracted position when operating in the deactivated state, such negative aerodynamic effects may be reduced or even be avoided.

Application of a positive pressure may in particular refer to applying a pressure that is above ambient pressure. Applying a negative pressure may comprise applying a pressure that is below the ambient pressure. It should be clear that the level of the applied positive pressure and of the applied negative pressure may depend on the particular configuration of the pneumatic or hydraulic actuator and optionally on the operating conditions of the wind turbine.

The negative pressure may in particular be applied at a level configured to compensate one or more external forces acting on the movable element or the control system towards the activated state, for example one or a combination of a force due to an air flow passing over the movable element in the retracted position or pressurization of a working fluid of the actuator caused by a centrifugal force, i.e. by rotation of the wind turbine rotor.

In an embodiment, the control system is configured to apply the negative pressure only after the active aerodynamic device is in the deactivated state, or is configured to apply a negative pressure to bring the active aerodynamic device from the activated state into the deactivated state and to apply the same or a different negative pressure in the deactivated state to retain the movable element in the retracted position. In the former case, a simple solution may be obtained in which the movable element may return to the retracted position without the application of negative pressure. In the latter configuration, the return of the movable element into the retracted position may be made faster, which may reduce the reaction time of the active aerodynamic device.

The activated state may also be a partially activated state in which the movable element protrudes from the surface of the rotor blade by an amount between a maximum protrusion and a minimum protrusion for achieving an aerodynamic effect. The amount of protrusion may for example be controlled by the control system. In other embodiments, the activated state may be a maximum protrusion of the movable element as controllable by the actuator.

The control system may be configured to apply the positive pressure to bring the active aerodynamic device from the deactivated state into the activated state, in particular to move the movable element from the retracted position into the activated position. The risk of an accidental activation of the active aerodynamic device, e.g. upon absence of a power or the like, may thereby be reduced.

The active aerodynamic device may be configured to remain in the deactivated state if no positive pressure and/or no negative pressure is applied to the actuator. Accordingly, without pressure application, the active aerodynamic device may be in the deactivated state and the movable element may have the retracted position as an equilibrium position. It may remain in the retracted position unless positive pressure is applied to the actuator. In other words, the active aerodynamic device may be normally closed. Further, even without the application of negative pressure, the movable element may remain in the retracted position. Negative pressure may thus not be required to bring the active aerodynamic device into the deactivated state. However, its application in the deactivated state is beneficial as it may prevent unwanted activation.

In an embodiment, the actuator is a pneumatic actuator and comprises an elongated element extending in a longitudinal direction and having an inner volume to which at least the negative pressure (preferably also the positive pressure) is applicable. The elongated element may for example be configured to extend in a longitudinal direction of the rotor blade when the active aerodynamic device is arranged on the rotor blade. A simple configuration may thus be obtained that allows activation and deactivation of the aerodynamic device by pressurizing and depressurizing the elongated element. The elongated element may for example be a pneumatic hose, tube, or bladder. The elongated element may for example be made of a soft-elastic material, such as polyurethane (PU), silicone rubber, TPU, or the like. It may for example have in cross-section (perpendicular to the longitudinal extension) a diameter of between 3 and 15 cm (measured in the activated state through a geometric center of the cross-section as the largest distance). A compact actuator that may achieve a desirable protrusion of the movable element may thereby be obtained.

The elongated element may for example have a first mounting area and a second mounting area each extending in the longitudinal direction. The first mounting area may be fixedly mounted, for example adhered, to the movable element. The second mounting area may be fixedly mounted, for example adhered, to the rotor blade (for example to the surface of the rotor blade) or to a fixed element of the active aerodynamic device that is configured to be fixedly mounted to the rotor blade (for example to the surface of the rotor blade). The active aerodynamic device, and in particular the respective second mounting area of the elongated element, may also be mounted to other positions of the rotor blade; it may for example be integrated within a cavity on a surface of the rotor blade and may thus be adhered to an internal surface of such cavity. The active aerodynamic device may in such case for example be fully integrated into a rotor blade. This provides the possibility that in the deactivated state, it does not protrude from the outer surface of the rotor blade.

In a cross section taken perpendicular to the longitudinal direction of the elongated element, e.g. of a pneumatic hose, the first mounting area may be smaller than 25%, preferably smaller than 20% of the circumference of the cross section of an outer wall surface of the elongated element. The second mounting area may likewise be smaller than 25%, preferably smaller than 20% of the circumference. The capability of the elongated element to change its shape or inner volume may thus be maintained even though it may be mounted between the movable element and the rotor blade.

Preferably, the first mounting area is substantially opposite to the second mounting area of the elongated element. By fixing the elongated element at the two opposite sides to the movable element and the rotor blade, an increased stroke length (e.g., maximal extension) of the actuator may be achieved.

The actuator may be mounted to the movable element by means of an adhesive. The adhesive is preferably flexible. The mounting may thus not impede movement of the actuator.

The pneumatic actuator may have a collapsed state in which the movable element is in the retracted position. The pneumatic actuator may be configured to take on the collapsed state upon application of no pressure and/or upon application of negative pressure to the pneumatic actuator.

The pneumatic actuator may further have an expanded state in which the movable element is in the activated position. The pneumatic actuator may be configured to take on the expanded state upon application of positive pressure.

A cross section of the actuator (e.g. taken in a direction perpendicular to a longitudinal extension thereof) may be substantially circular in a pressurized state of the actuator in which the positive pressure is applied (activated state of aerodynamic device). The actuator may be substantially flat or plate-shaped in the deactivated state of the aerodynamic device, e.g. when the negative pressure is applied.

In an embodiment, the pneumatic actuator has one, two or more pre-bent sections configured to facilitate bringing the pneumatic actuator into a collapsed state and/or to apply a restoring force that is effective to bring the pneumatic actuator into a collapsed state in which the movable element is in the retracted position. Such pre-bent sections may for example be provided in the elongated element, they may extend in a longitudinal direction thereof. A pre-bent section may have a curvature in a cross-section of the elongated element which it may retain substantially upon actuation of the elongated element. The pre-bent section may for example have the form of a rounded edge. It may be stable in form and may only slightly deform during expansion of the actuator. Such pre-bent section may reduce stress when operating the actuator in cyclic operation.

For example, the pre-bent sections may be (slightly) tensioned when the actuator is brought into the activated state, e.g. expanded state, and may return to an untensioned state when the actuator is brought into the collapsed state. A force applied against the wall of the elongated element by the positive pressure may for example tension the pre-bent sections. The pre-bent sections may in particular be provided with a geometry such that the stresses in the material are reduced by avoiding relatively small radii of curvature in the collapsed state, **e.g.** avoiding sharp corners in the collapsed state.

In an embodiment, the control system comprises one, two, or more pneumatic pumps, and one, two, or more pneumatic control valves. At least one pneumatic pump may for example be operable to generate the positive pressure and the negative pressure that is applicable via the one or more pneumatic control valves to the pneumatic actuator (for example by means of a changeover valve). As another example, a first pneumatic pump may be operable to generate the positive pressure applicable via a pneumatic control valve to the pneumatic actuator, and a second pneumatic pump may be operable to generate the negative pressure applicable via a or the pneumatic control valve to the pneumatic actuator. Two single control valves, e.g. a two-way valve, or a changeover control valve, e.g. a three-way valve, may be employed. Such two-pump-configuration may provide the possibility of employing a larger pump for applying the positive pressure and a smaller pump for applying the negative pressure, which may improve the efficiency of the control system. In the case that plural pumps are provided, these may be used for redundancy purposes, or to alleviate the wear and tear of a single pump. Furthermore, if plural pumps are used, one may choose to operate them in alternate manner to allow the pumps periodically to cool down from their normal operational temperature. Respective control valves may be electrically activated. A control system may comprise an electrical controller in communication with the one, two, or more control valves. For example, such electrical controller may be configured to receive a command for activation or deactivation of the active aerodynamic device and may control the pumps and/or the control valves accordingly.

In some embodiments, the negative pressure may be controlled dynamically by the control system.

The control system may be configured to control the application of the negative pressure (e.g. a level of the applied negative pressure) in the deactivated state based on an operating parameter of the wind turbine, such as a rotational speed of a rotor of the wind turbine, an operating state of the wind turbine and/or an environmental condition, such as wind speed.

For example, at a high rotational speed of the wind turbine rotor (e.g. at nominal rotational speed), the control system may be configured to apply an upper predetermined level of negative pressure. At a lower rotational speed, the control system may be configured to apply a lower level of negative pressure. Such configuration may account for a reduction of the pressure in the, e.g., pneumatic control system caused by centrifugal compression of the working fluid.

As another example, the control system may be configured to turn off the application of pressure, for example by switching off one or more respective pumps, if the wind turbine is operated in a deactivated state. Such deactivated state may be a state in which the wind turbine does not feed electrical power to the grid (but is still connected to the grid), e.g. a service state (where the turbine is not in back-flow situations), an active or passive idle state, an off-state or the like. In such state where the turbine is not rotating and the atmospheric wind is coming from the front of the wind turbine, the active aerodynamic device may for example not experience suction forces, backflow, and/or centrifugal forces, so that the risk of an unwanted activation may be rather low. Accordingly, by not applying pressure in such state, energy consumption and the wear and tear of the pumps and valves may be reduced. This may in particular be performed if the wind speeds are relatively low during operation in the deactivated state.

As another example, when operating in such deactivated state and at elevated wind speeds, a medium level of negative pressure may be applied by the control system. In such deactivated state, for example in a service state, idle state, or the like, no or low centrifugal force may be present, but the rotor may not be yawed into the wind so that backflow may be experienced. Such medium level of negative pressure may thus effectively protect the active aerodynamic device from becoming accidentally activated by backflow.

Preferably, a level of the negative pressure applied in the deactivated state to the actuator may be larger than a level of pressure applied to the actuator due to a centrifugal force acting on a working fluid of the actuator and a pressure corresponding to a force applied to the actuator by suction of an air stream passing the movable element during operation of the wind turbine. The level of the negative pressure may thus be set so that even if the sum of these two forces act on the movable element, it may be retained securely in the retracted position.

The control system may for example be configured to apply a negative pressure of lower than -0.04 bar, preferable lower than -0.1 bar, more preferably lower than -0.14 bar with respect to ambient pressure to the actuator. In other words, the applied pressure may be lower than -0.04 barg, -0.1 barg, or -0.14 barg (the unit barg referring to gauge pressure). As mentioned above, the negative pressure level may be varied in dependence on the current operating state, operating parameter, and/or environmental conditions. A negative pressure level of lower than -0.15 bar may for example provide secure protection from accidental activation in most operating conditions.

In an embodiment, the active aerodynamic device may comprise an energy storage device. The aerodynamic device may be configured to apply the negative pressure without external power supply by using energy stored in the energy storage device. For example, such energy storage device may comprise a battery. It may be employed for operating a pump of the control system that generates the negative pressure. Such configuration may have particular advantages during installation and/or commissioning of the wind turbine, for example when the wind turbine rotor is non-operational for prolonged periods of time during which the risk of the occurrence of backflow and of an unwanted activation of the aerodynamic device, and possibly resulting damage, may be increased. This may allow effective protection of the aerodynamic device from respective damage.

The movable element may for example be a flap or spoiler. The movable element may have a first end comprising a pivoting section at which the movable element is movably supported. It may further have a second opposite end configured to protrude from the rotor blade, e.g. from the surface, in the activated position. The flap or spoiler may for example be configured to be hinged, directly or indirectly, to the rotor blade. The first and second ends may extent in the longitudinal direction, for example parallel to a longitudinal extension of the pneumatic actuator, e.g. parallel to a pneumatic hose or bladder. The pivoting section may for example be provided as a flexible section, as a mechanical hinge, or the like. The movable element may be movable between the retracted position and the activated position by pivoting about the pivoting section, e.g., by a respective deformation of the pivoting section or about a respective rotational joint. The first end may be configured to be mounted to the rotor blade, or may be fixed to a part of the active aerodynamic device that is configured to be mounted to the rotor blade.

Preferably, the movable element has a flexible section, which may allow the movement. In an example, in the activated position, the movable element may provide by means of the flexible section a restoring force directed against the force applied by the actuator to the movable element. Accordingly, if the actuator is no longer actuated by application of positive pressure, the restoring force may cause the movable element to return to the retracted position. The flexible section may correspond to the pivoting section. A bending of the flexible section may provide the restoring force.

The actuator may be spaced apart from a pivoting section of the movable element at which the movable element is movably supported. It may be spaced apart from a flexible section of the movable element at which the movable element flexes to be brought from the retracted position to the extended position.

The active aerodynamic device may further comprise a positioning element. The actuator may be in engagement with the positioning element. The positioning element may be fixedly mounted to a pivoting section or mounting section of the aerodynamic device. The positioning element may be configured to position the actuator relative to the movable element, for example in a direction perpendicular to the pivoting axis about which the movable element is pivotable when being moved between the retracted and the activated positions. Again, it is noted that such pivoting section may be provided by a flexible section which allows movement by bending.

According to a further aspect of the disclosure, a rotor blade for a wind turbine is provided. The rotor blade comprises an active aerodynamic device having any of the configurations described wherein.

For example, the rotor blade may have a suction side with a suction side surface and a pressure side with a pressure side surface. At least one respective active aerodynamic device may be provided on the suction side and the movable element may be configured to protrude from the suction side surface, and/or at least one active aerodynamic device may be provided on the pressure side and the movable element may be configured to protrude from the pressure side surface. Plural active aerodynamic devices may be provided on the suction side and/or on the pressure side. If plural aerodynamic devices are provided, they may be controlled collectively or individually by the same control system. In particular, only a single control system may control plural active aerodynamic devices. For individual control, such control system may for example comprise plural control valves.

According to a further aspect of the disclosure, a wind turbine comprising a rotor blade having any of the configurations described herein is provided.

According to a further aspect of the disclosure, a method of operating an active aerodynamic device of a rotor blade of a wind turbine is provided. The active aerodynamic device is arranged on a surface of the rotor blade and has an activated state in which an air flow passing from a leading edge to a trailing edge of the rotor blade is influenced (e.g. spoiled and/or disturbed). The aerodynamic device comprises a movable element having an activated position in which the movable element protrudes from the surface of the rotor blade and a retracted position in which the movable element protrudes less or does not protrude from the surface of the rotor blade. The aerodynamic device comprises a pneumatic or hydraulic actuator to which a positive pressure is applicable to move the movable element from the retracted position into the activated position and to which a negative pressure is applicable. The method comprises bringing the active aerodynamic device into the activated state by applying a positive pressure to the pneumatic or hydraulic actuator to bring the movable element into the activated position; bringing the active aerodynamic device into a deactivated state in which the movable element is in the retracted position; and applying a negative pressure to the actuator when the active aerodynamic device is in the deactivated state to retain the movable element in the retracted position. The negative pressure may for example be applied after the active aerodynamic device has reached the deactivated state, or a negative pressure (the same or a different) may already be applied during the movement of the movable element into the retracted position.

By such rotor blade, wind turbine, or method, advantages similar to those outlined further above with respect to the active aerodynamic device may be achieved.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind turbine with a rotor blade comprising an active aerodynamic device according to an embodiment.
Fig. 2 is a schematic drawing showing a rotor blade comprising plural active aerodynamic devices according to an embodiment.
Fig. 3 is a schematic drawing illustrating backflow that may result in an unwanted activation of an active aerodynamic device.
Fig. 4 is a schematic drawing showing an active aerodynamic device according to an embodiment in an activated state.
Fig. 5 is a schematic drawing showing an active aerodynamic device according to an embodiment in a deactivated state.
Fig. 6 is a schematic drawing showing an active aerodynamic device according to an embodiment in an activated state.
Fig. 7 is a flow diagram illustrating a method of operating an active aerodynamic device according to an embodiment.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

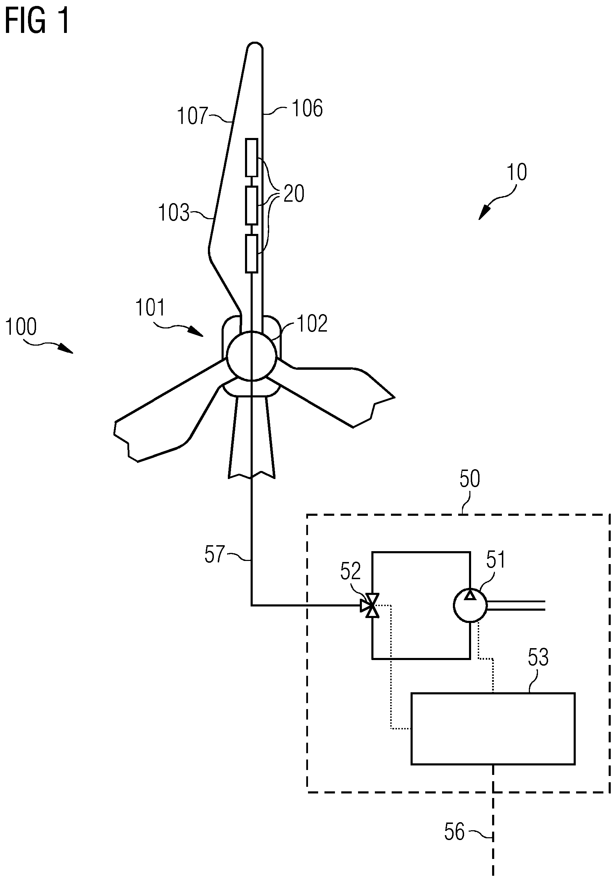

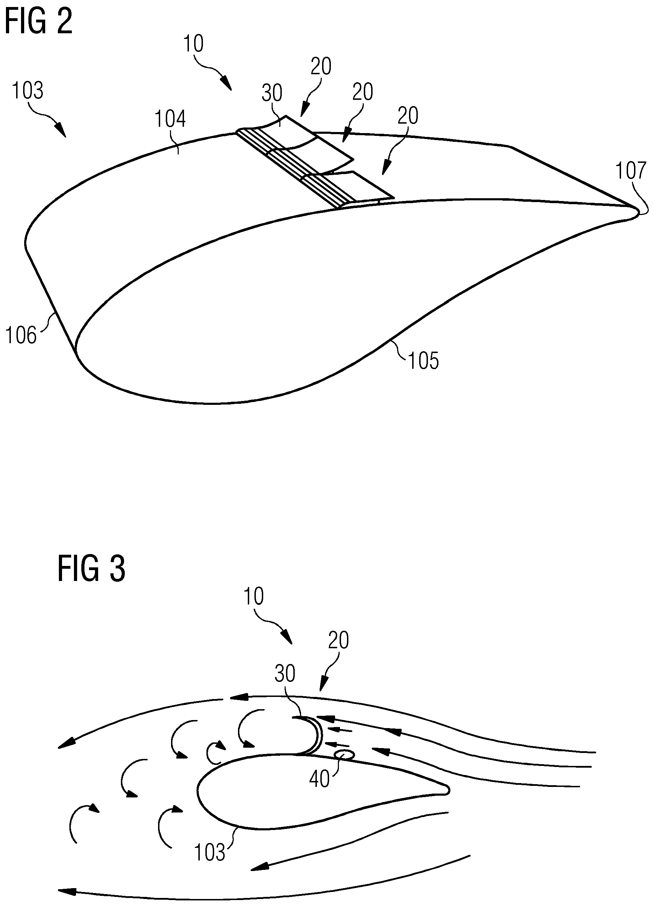

Fig. 1 schematically illustrates a wind turbine 100 having a wind turbine rotor 101 with a rotor hub 102 and rotor blades 103. One or more rotor blades 103 are equipped with one or more active aerodynamic devices 10 according to an embodiment. The active aerodynamic device 10 comprises an aerodynamic device part 20 and a control system 50. Plural active aerodynamic devices 10 may share one common control system 50, or at least parts thereof. Each active aerodynamic device 10 comprises a flow modifying element, in particular a movable element, that modifies the airflow from a leading edge 106 to a trailing edge 107. Fig. 2 illustrates three respective active aerodynamic devices 10 that are arranged adjacent to one another in a longitudinal direction of the rotor blade 103. The one or more active aerodynamic devices 10 may be arranged on a suction side 104 and/or on a pressure side surface 105 of the rotor blade 103. They are preferably arranged on at least on the suction side. The aerodynamic device part 20 comprises the movable element 30 that can be brought from a retracted position (as illustrated for the device in the foreground) to an activated position (as illustrated for the two devices in the background) in which the airflow from leading edge 106 to trailing edge 107 is influenced, in particular deflected or spoiled. Plural active aerodynamic devices 10 may for example span a range of between 15% and 40% of the length of the rotor blade. In the activated state of the active aerodynamic device, the movable element 30, e.g. flap or spoiler, may protrude from the respective surface 104, 105 of the rotor blade by a distance of between about 1% and 6% of the local chord length at the mounting position of the respective active aerodynamic device. This may allow the device to adjust the lift and/or drag of the rotor blade, which may supplement pitch control. Frequent activations of the pitch system may for example be avoided by use of such active aerodynamic device 10.

It has been found that in certain situations, the active aerodynamic device 10 may accidentally become activated. Turning back to Fig. 1, activation of the active aerodynamic device 10 may occur by a pneumatic or hydraulic actuator. A control line 57, such as a pneumatic or hydraulic control line, may for example apply a pressure to the actuator to bring the movable element 30 into the activated position. During rotation of the wind turbine rotor 101, centrifugal force acting on the fluid in the control line 57 may cause a pressure increase in the control line 57, which may result in accidental activation of the active aerodynamic device 10. For example, for a pneumatic system, the centrifugal force may result in a pressure increase of between 0.03 and 0.1 bar, which are only exemplary values that depend on the size of the rotor blade, the position of the active aerodynamic device, and rotational speed of the wind turbine rotor 101. Furthermore, returning to Fig. 2, the air stream passing over the suction side surface 104 of the rotor blade 103 may apply suction forces on the movable element 30 in the deactivated state, which may likewise result in an unwanted activation, i.e. the applied suction force may force the movable element 30 towards the activated position.

Fig. 3 shows a further example of an unwanted activation, wherein the rotor blade 103 experiences a backflow, which may occur during standstill of the wind turbine (such as after installation) when the wind turbine is not yawed into the wind. Fig. 3 shows a respective extreme deflection of the movable element 30 that may occur upon experiencing such backflow. Fig. 3 further shows a pneumatic actuator 40, wherein the movable element 30 is lifted off the pneumatic actuator 40.

As another example, upon a slight partial activation of the active aerodynamic device 10, small amplitude unstable or self-sustained oscillations may occur and have been observed. These may be due to an unsteady separation of the flow at the edge of the spoiler. This may occur when the movable element 30 is not fully in the retracted position, but may protrude slightly more than in the retracted position (which may be due to any of the above indicated unwanted activation modes).

The disclosed solution may be employed to reduce the risk of such unwanted activation, and optionally of resulting oscillations.

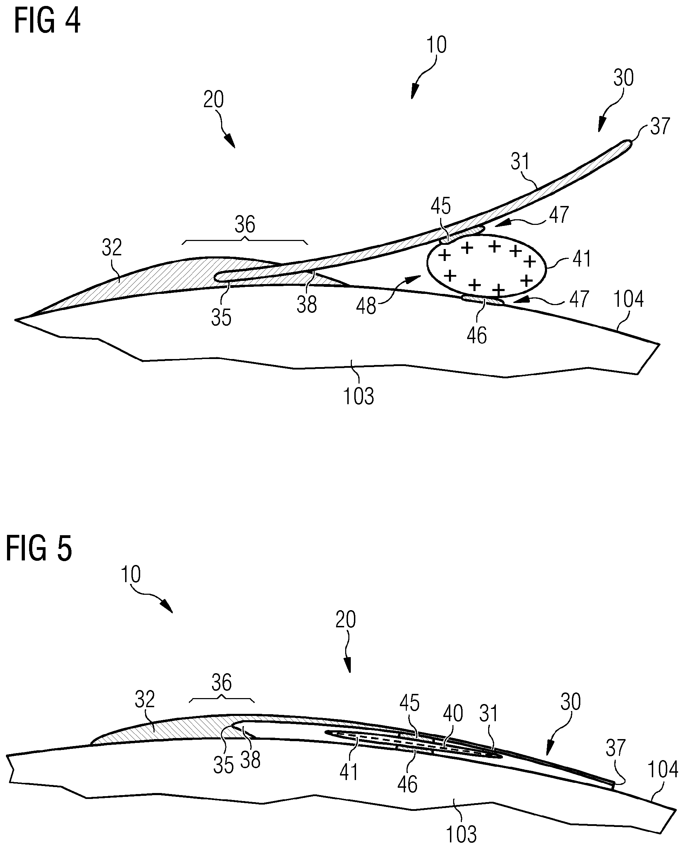

Fig. 4 illustrates an embodiment of the active aerodynamic device 10 that includes the movable element 30 and a pneumatic actuator 40. The pneumatic actuator 40 is provided in form of an elongated element 41 that has a longitudinal direction of extension, which is substantially aligned with the longitudinal direction of the rotor blade 103. Accordingly, in the cross-sectional view of Fig. 4, the cross-section of the elongated element 41 perpendicular to its longitudinal extension is visible. The longitudinal element 41 is in particular provided as a pneumatic tube, pneumatic hose, pneumatic bladder, or the like. The actuator 40 has a first mounting area 45 by means of which it is fixedly mounted to the movable element 30, which is implemented as the flap 31 in the present example. Further, it comprises a second mounting area 46 by means of which it is mounted to the rotor blade 103, for example to the suction side surface 104 thereof. Fig. 4 illustrates an activated state of the active aerodynamic device 10 in which a positive pressure (indicated by "+" signs) is applied to the pneumatic actuator 40. The pneumatic tube thus expands and pushes the flap 31 upwardly so that it protrudes further from the surface 104 of rotor blade 103. The airflow is thus modified, and may in particular be spoiled. The mounting may occur by means of an adhesive 47, which may in particular be a flexible adhesive that retains a flexibility. This may facilitate expansion of the pneumatic tube or other pneumatic actuator 40. Furthermore, by providing first and second mounting areas 45, 46, it may be avoided that the flap 31 can lift off the actuator 40. The movable element 30 is thus retained in contact with the actuator 40 and cannot be lifted off the actuator 40.

Movable element 30 may have a pivoting section 36 that allows a pivoting of the movable element 30 about the respective pivoting section. It may for example be provided by a flexible section 38 of the flap 31. The flap 31 is supported such that it can flex by means of the flexible section 38, which may further provide a restoring force for restoring the movable element 30 into the retracted position.

Such retracted position is illustrated in Fig. 5 in which the active aerodynamic device 10 is in the deactivated state and the movable element 30 is in the retracted position. As can be seen, the pneumatic actuator 40, in particular the elongated element 41, has collapsed, as no positive pressure is applied. The position of the movable element 30 illustrated in Fig. 5 may correspond to an equilibrium position to which the movable element returns upon no application of force. However, as described above, unwanted activation may occur due to any of the respective unwanted activation modes. In the deactivated state and retracted position illustrated in Fig. 5, a negative pressure (illustrated by "-" signs) is thus applied to the pneumatic actuator 40 in order to retain the movable element 30 in the retracted position. The negative pressure may result in that a significant force is required to lift the movable element 30, in particular due to the fact that it is mounted by the mounting area 45 to the actuator 40. The risk of an unwanted activation due to suction forces being applied by a fast airflow passing the suction side surface 104 or due to backflow may thus be reduced significantly. Furthermore, in view of the negative applied pressure, pressure that is generated in the pneumatic control line 57 due to centrifugal force may be compensated, so that an unwanted activation due to centrifugal force may be avoided.

Preferably, the actuator 40 is positioned in a spaced-apart relationship with respect to the pivoting section 36. This may allow applying sufficient force to the movable element 30 so that the active aerodynamic device can also be activated if the flow passes the surface 104 at higher velocities. Further, the mounting areas 45, 46 only cover part of the circumference of the elongated element 41 in the cross-section, so that the element 41 can retain its flexibility and can be provided with a relatively large stroke, thereby increasing the possible protrusion of the movable element 30 from the surface 104. Although one actuator 40 is shown, it is also possible to provide the active aerodynamic device 10 with two or more actuators, and for example to apply positive pressure to one actuator and apply negative pressure to another actuator.

The movable element 30 has a second end 37 that protrudes from the surface 104 when the active aerodynamic device is in the activated state. The first end 35 may be mounted fixedly to the rotor blade by means of a mounting portion 32. Mounting portion 32 may be mounted to the surface 104 of the rotor blade, or may be mounted under the surface 104. In the example of Figs. 4 and 5, the mounting portion 32 and the movable element 30 also protrude from surface 104 when the device is in the deactivated state. In other implementations, a recess may be provided on the surface 104 of the rotor blade in which the mounting portion 32 and/or the movable element 30 are provided, as well as the actuator 40, so that the active aerodynamic device 10 may not protrude from surface 104 when in the deactivated state.

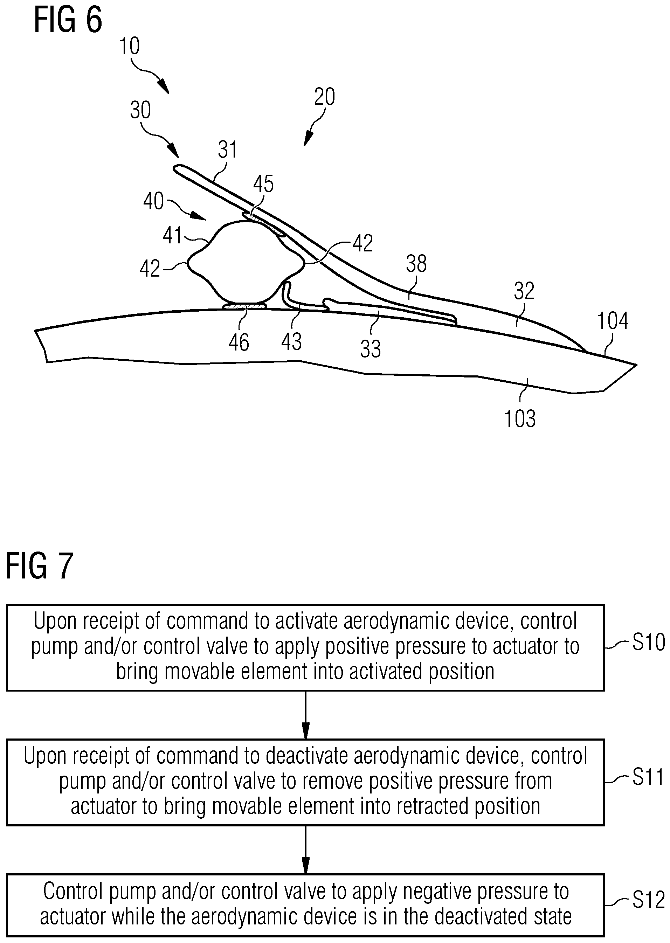

Fig. 6 illustrates a further possible implementation of the active aerodynamic device 10 which is a modification of the preceding embodiments, so that the above explanations are equally applicable. The elongated element 41 may have one or two pre-bent sections 42 that may run along the longitudinal direction of the elongated element 41. These can be seen as curved sections in the cross-sectional view of Fig. 6. Thus pre-bent sections may for example form respective rounded edges extending in the longitudinal direction. They may reduce stresses when cycling the actuator 40 between the deactivated and the activated states. Further, they may facilitate bringing the actuator 40 into the collapsed state that is illustrated in Fig. 5. Further, they may provide a restoring force that acts towards bringing the actuator into the collapsed state. Providing such pre-bent sections 42 may accordingly have several advantages. Further, in the example of Fig. 6, the active aerodynamic device 10 is provided with a positioning element 33 for positioning the actuator 40 with respect to the movable element 30. The positioning element 33 protrudes from the mounting portion 32 towards the actuator 40 for a predetermined distance, for example along the surface 104 of rotor blade 103. It may comprise an engagement portion that is engaged by a positioning portion 43 of the actuator 40. By such engagement, a predetermined spacing between the actuator 40 and the first end 35 of the movable element 30 at which it is fixed by the mounting portion 32 may be adjusted and maintained along the longitudinal direction. The amount of protrusion of the second end 37 of the movable element from the surface 104 may thus be controlled accurately by the actuator 40.

Turning back to Fig. 1, the control system 50 is configured to activate the active aerodynamic device 10 by applying a positive pressure to the actuator 40, e.g. via the control line 57. The control system 50 may comprise a respective, e.g. pneumatic, pump 51 to generate such positive pressure and a control valve 52 to control the pressure applied to the actuator 40. The positive pressure may be controlled either by the control valve 52 or directly by pump 51, in which case control valve 52 is optional. A set-point 56 for the active aerodynamic device may for example be received from a controller, such as a wind turbine controller, and an electrical controller 53 of control system 50 may control the pump 51 and/or control valve 52 accordingly.

To apply negative pressure, the pump 51 may be used to generate negative pressure (suction at pump inlet), and the control valve 52 may be implemented as a changeover valve that can change between application of positive pressure, no pressure, and negative pressure to the control line 57. In other implementations, two separate pumps 51 may be provided, one for generating the positive pressure and the other for generating a negative pressure, **e.g.** a suction pump. This may have the advantage that a larger pump may be employed for generating the positive pressure, as a higher pressure differential may be required. A smaller pump may then be used for generating the negative pressure. Again, the amount of pressure to be applied may be controlled directly by the respective pump or by the control valve 52.

In even other implementations, separate control valves may be provided for applying the positive or the negative pressure to the actuator 40.

Preferably, the control system is a pneumatic control system.

Valve 52 and/or pump 51 may for example be provided within the hub 102. The control line 57 may have sufficient flexibility to allow pitching of the rotor blade 103. Advantage of such system is that no additional electrical components need to be provided within rotor blade 103, which may reduce the risk of damage due to lightning strike.

As described above with respect to Fig. 3, unwanted activation of the active aerodynamic device 10 may also occur during standstill of the wind turbine 100, such as after installation of the wind turbine before it starts to operate. To prevent damage to the active aerodynamic device in such situations, the control system 50 may comprise an energy storage device (not shown) from which the pump that applies the negative pressure may be fed. Accordingly, the negative pressure may also be applied while wind turbine 100 is not grid-connected and has no own power source, thus efficiently protecting the active aerodynamic device 10 from damage. A (small) dedicated pump for generating negative pressure may be employed in such setup.

The control system 50 may operate the pump for applying the negative pressure so as to apply a pressure of between about -0.04 and -0.2 bar relative to the ambient pressure. For example, by applying a negative pressure of -0.15 bar, most forces that may generate an unwanted activation may be compensated and the risk of unwanted activation may already be reduced significantly. It should be clear that the same effects can be achieved by applying more negative pressure, such as a pressure of below -0.2 barg (e.g., an absolute pressure below about 0.8 bar).

Control system 50 may further be configured to adjust the amount of negative pressure applied in the deactivated state of the active aerodynamic device 10 to the actuator 40 in dependence on an operating parameter of the wind turbine, an operating state of the wind turbine, and/or an environmental condition. If the wind turbine 100 is for example in a state of deactivation and the rotor 101 is in standstill, no centrifugal forces exist, so a lower level of negative pressure (e.g., -0.07 bar) may be applied. On the other hand, during operation at nominal speed and high wind speeds, a higher level of negative pressure may be applied (such as -0.15 bar). If there is a low wind speed and the wind turbine is deactivated, no negative pressure may be applied to the actuator, as the risk of unwanted activation is low. It should be clear that the level of negative pressure to be applied can be selected in accordance with the above mentioned parameters, so that any forces acting on the movable element to cause an unwanted activation are compensated by the negative pressure.

Fig. 7 is a flow diagram illustrating an exemplary method that may be performed by the control system 50 of the active aerodynamic device 10. In step S10, upon receipt of a command (e.g., a set-point 56) to activate the aerodynamic device, the pump 51 and/or the control valve 52 is controlled to apply a positive pressure to actuator 40 to bring the movable element 30 into the activated position, which is for example illustrated in Figs. 4 and 6. In step S11, upon receipt of a command to deactivate the aerodynamic device (e.g. via a respective set-point 56), the pump 51 and/or the control valve 52 is controlled to remove the positive pressure from the actuator to bring the movable element into the retracted position. Such position is exemplarily illustrated in Fig. 5. The removing of the positive pressure may for example occur by venting the positive pressure from the control line 57, or optionally by applying a negative pressure to the control line 57. In the latter case, moving the movable element 30 to the retracted position may occur more quickly. The control system may be configured so as to close the valves (and maintain positive or negative pressure) until due to small leakages a re-supply of positive or negative pressure is required. The valves may be installed in combination with one or more pressure measurement devices to provide the control system with pressure measurement information.

In step S12, the active aerodynamic device 10 is in the deactivated state and the pump 51 and/or the control valve 52 is controlled to apply a negative pressure to the actuator 40. Thereby, the active aerodynamic device 10 may be protected efficiently from unwanted activation.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. An active aerodynamic device for a rotor blade of a wind turbine, wherein the active aerodynamic device (10) is configured to be arranged on a surface (104, 105) of the rotor blade (103) to influence, in an activated state, an air flow passing from a leading edge (106) to a trailing edge (107) of the rotor blade (103),
wherein the active aerodynamic device comprises:
- a movable element (30) having an activated position in which the movable element (30) protrudes from the surface (104, 105) of the rotor blade and a retracted position in which the movable element (30) protrudes less or does not protrude from the surface (104, 105) of the rotor blade; and
- a pneumatic or hydraulic actuator (40) that is controllable to bring the active aerodynamic device (10) into the activated state by applying a positive pressure to the actuator (10) to move the movable element (30) from the retracted position into the activated position,
wherein the active aerodynamic device (10) further has a deactivated state in which the movable element (30) is in the retracted position, wherein the active aerodynamic device (10) further comprises a control system (50), wherein the control system (50) is configured to apply a negative pressure to the actuator (40) when the active aerodynamic device is in the deactivated state, the actuator (40) being configured and arranged to retain the movable element (30) in the retracted position when the negative pressure is applied.

2. The active aerodynamic device according to claim 1,
wherein the control system (50) is configured to apply the negative pressure only after the active aerodynamic device (10) is in the deactivated state, or wherein the control system (50) is configured to apply a negative pressure to bring the active aerodynamic device (10) from the activated state into the deactivated state and to apply the negative pressure in the deactivated state to retain the movable element (30) in the retracted position.

3. The active aerodynamic device according to claim 1 or 2,
wherein the actuator (40) is a pneumatic actuator and comprises an elongated element (41) extending in a longitudinal direction and having an inner volume to which at least the negative pressure is applicable, wherein the elongated element (41) is preferably configured to extend in a longitudinal direction of the rotor blade (103) when the active aerodynamic device (10) is arranged on the rotor blade.

4. The active aerodynamic device according to claim 3,
wherein the elongated element (41) has a first mounting area (45) and a second mounting area (46) each extending in the longitudinal direction, wherein the first mounting area (45) is fixedly mounted, preferably adhered, to the movable element (30), and wherein the second mounting area (46) is fixedly mounted, preferably adhered, to the rotor blade (103) or to a fixed element configured to be fixedly mounted to the rotor blade (103).

5. The active aerodynamic device according to any of the preceding claims, wherein the control system (50) is configured to apply the positive pressure to bring the active aerodynamic device (10) from the deactivated state to the activated state, in particular to move the movable element (30) from the retracted position into the activated position.

6. The active aerodynamic device according to any of the preceding claims, wherein the active aerodynamic device (10) is configured to remain in the deactivated state if no positive pressure and/or no negative pressure is applied to the actuator (40).

7. The active aerodynamic device according to any of the preceding claims, wherein the actuator (40) is mounted to the movable element (30) by means of an adhesive, wherein the adhesive is flexible.

8. The active aerodynamic device according to any of the preceding claims, wherein the pneumatic actuator (40) has one, two or more pre-bent sections (42) configured to facilitate bringing the pneumatic actuator (40) into a collapsed state and/or to apply a restoring force that is effective to bring the pneumatic actuator (40) into the collapsed state in which the movable element (30) is in the retracted position.

9. The active aerodynamic device according to any of the preceding claims, wherein the control system (50) comprises one, two or more pneumatic pumps (51) and one, two or more pneumatic control valves (52), wherein at least one of the one, two or more pneumatic pumps (51) is operable to generate the positive pressure and the negative pressure, which are applicable via the one, two or more pneumatic control valves (52) to the pneumatic actuator (40), or wherein a first pneumatic pump of the one, two or more pneumatic pumps (51) is operable to generate the positive pressure applicable via one of the one, two or more pneumatic control valves (52) to the pneumatic actuator, and a second pneumatic pump of the one, two or more pneumatic pumps (51) is operable to generate the negative pressure applicable via the or another of the one, two, or more pneumatic control valves (52) to the pneumatic actuator (40).

10. The active aerodynamic device according to any of the preceding claims, wherein the control system (50) is configured to control the application of the negative pressure in the deactivated state based on an operating parameter of the wind turbine (100), preferably a speed or a rotor (101) of the wind turbine, an operating state of the wind turbine, and/or an environmental condition.

11. The active aerodynamic device according to any of the preceding claims, wherein the movable element (30) is a flap or spoiler, wherein the movable element preferably has a first end (35) comprising a pivoting section (36) at which the movable element is movably supported and further having a second opposite end (37) configured to protrude from the surface (104, 105) of the rotor blade (100).

12. The active aerodynamic device according to any of the preceding claims, wherein the movable element (30) has a flexible section (38), wherein in the activated position, the movable element (30) provides, by means of the flexible section (38), a restoring force directed against a force applied by the actuator (40) to the movable element (30).

13. The active aerodynamic device according to any of the preceding claims, further comprising a positioning element (33), the actuator (40) being in engagement with the positioning element (33), the positioning element (33) being fixedly mounted to a mounting portion (32) of the active aerodynamic device (10) at which the movable element (30) is movably supported, wherein the positioning element (33) is configured to position the actuator (40) relative to the movable element (30).

14. A rotor blade for a wind turbine, wherein the rotor blade (103) comprises at least one active aerodynamic device (10) according to any of the preceding claims.

15. A method of operating an active aerodynamic device (10) of a rotor blade (103) of a wind turbine (100), wherein the active aerodynamic device (10) is arranged on a surface (104, 105) of the rotor blade (100) and has an activated state in which an air flow passing from a leading edge (106) to a trailing edge (107) of the rotor blade (100) is influenced, wherein the aerodynamic device (10) comprises a movable element (30) having an activated position in which the movable element (30) protrudes from the surface (104, 105) of the rotor blade and a retracted position in which the movable element protrudes less or does not protrude from the surface of the rotor blade (103); and a pneumatic or hydraulic actuator (40) to which a positive pressure is applicable to move the movable element (30) from the retracted position into the activated position and to which a negative pressure is applicable, wherein the method comprises:
- bringing the active aerodynamic device (10) into the activated state by applying a positive pressure to the pneumatic or hydraulic actuator (40) to bring the movable element (30) into the activated position;
- bringing the active aerodynamic device (10) into a deactivated state in which the movable element (30) is in the retracted position; and
- applying a negative pressure to the actuator (40) when the active aerodynamic device (10) is in the deactivated state to retain the movable element (30) in the retracted position.
